# EUROPEAN PATENT SPECIFICATION

(11) **EP 3 359 864 B1**
(45) Date of publication and mention of the grant of the patent: **17.09.2025**
(21) Application number: 16853995.5
(22) Date of filing: 07.10.2016
(51) Int. Cl.: F16L 55/165, B29C 63/34, F16L 58/04, B29C 63/00, B32B 5/02, B32B 15/14, B32B 27/12, B32B 27/38, B32B 27/42, B32B 1/08, F16L 58/10, B29K 309/08, B29K 307/04, B29K 105/08, B29K 63/00, B29L 23/00, B29L 31/00

(54) **LINER HAVING NO COATING UTILIZED FOR RELINING A HEATING PIPE, METHOD AND USE**
AUSKLEIDUNG OHNE BESCHICHTUNG ZUR NEUAUSKLEIDUNG EINES HEIZROHRS, VERFAHREN UND VERWENDUNG
GARNISSAGE NE COMPRENANT PAS DE REVÊTEMENT UTILISÉ POUR LE RE-GARNISSAGE D'UN TUYAU DE CHAUFFAGE, PROCÉDÉ ET UTILISATION

(30) Priority: 09.10.2015 SE 1551307
(43) Date of publication of application: 15.08.2018
(73) Proprietor: Pressure Pipe Relining Sweden AB, 169 37 Solna (SE)
(72) Inventor: PERSSON, Johan, 820 71 Ilsbo (SE); HÅKANSSON, Stefan, 113 43 Stockholm (SE)
(74) Representative: Brann AB
(86) International application number: PCT/SE2016/050967
(87) International publication number: WO 2017/061944

(56) References cited:
- EP-A1- 1 920 913
- EP-A1- 2 660 500
- EP-A1- 2 660 500
- EP-A2- 0 403 133
- CA-A1- 2 674 984
- GB-A- 2 425 815
- JP-A- 2002 086 565
- US-A- 4 976 290
- US-A1- 2002 058 121
- US-A1- 2003 234 057
- US-A1- 2007 209 726
- US-A1- 2009 314 409
- US-A1- 2010 258 244
- US-A1- 2013 074 972
- US-A1- 2013 098 535

## Description

### TECHNICAL FIELD

The present invention relates to a re-liner related to the field of relining a heating pipe with a re-liner and a corresponding method for re-lining a district heating pipe.

### BACKGROUND

EP0403133A2 discloses a known prior art relevant to the present invention.

District heating networks are used in many cities and communities for transporting heat from a centralized heat generation plant to residential and commercial users. The heat may be used for e.g. heating buildings or tap water. The heat is transported in the form of district heating water via district heating pipes which typically operate at high temperatures and high pressures. Herein, "high temperatures" are temperatures up to 150 °C. Herein, "high pressures", are pressures up to 25 bar. The district heating pipes are typically made of metal such as steel in order to withstand the high temperatures and pressures.

District heating pipes are laid out in conditions where ground and surface water may access the pipe surface through holes in insulation or covers. Since the pipes are typically held at a high temperature corrosion from the outside of the pipe can be a major problem. Combined with the high temperature and pressures used in the district heating pipes and internal corrosion from the heating fluid, the function of a system may degrade over time. Small holes and voids may appear which will cause the district heating water to leak to the outside, thus increasing the thermal losses in the network and at times requiring shutting down of the network. Since the district heating pipes are typically subterranean and require trenches to be able to exchange the pipes, the exchange of the pipes will involve high costs. It is therefore a need for systems and methods for trench-less renovation of district heating pipes.

Trenchless renovation, for instance re-lining, of various pipes has been intensively investigated in the prior art, such as in US 2012/0006465, wherein a shape part made of a polyamide shaped component is used as an internal liner for a conduit.

It is also highly desirable that the internal liner be able to withstand high stresses such as high temperatures and high pressure.

Typical problems that today's re-liners and re-lining methods for pipes under pressure and temperature suffer from are problems with water entering the liner from an outside of the liner. In combination with heat inside the liner from the hot water, this will cause problems with corrosion of traditional liners, in particular of the reinforcing fibers that can be subject to embrittlement when exposed to water at high temperature.

Another drawback is that liners made of multiple laminated layers also sometimes suffer from delaminating layers. This can also be described by a loss of adhesion in the interface between the fibers and the resin if a composite product is used. Caused partly by the earlier mentioned embrittlement.

Thus, there is still room for improvement with regard to the drawbacks encountered.

### DESCRIPTION OF THE INVENTION

In the present context it would be an advantage to be able to use a heat-curable and high-temperature-resistant resin in combination with corrosion resistant reinforcing fibers in order to allow the liner to be easy to handle and install in the defective district heating pipeline.

Herein, this disclosure, the term "for re-lining a district heating pipe" is not limited to only re-lining district heating pipes , but also encompasses other pipes for high pressures and temperatures, such as industrial pipes.

The term "high temperature" should in the present context be understood to mean 110-150 °C, which is the typical maximum temperature of the district heating water.

In a first aspect the present invention relates to a tubular liner for re-lining a heating pipe according to claim 1. Further embodiments are defined by the dependent tubular liner claims.

In a second aspect the present invention relates to a method of renovating a district heating pipe according to claim 5. Further embodiments are defined by the dependent method claims.

The above object, the above advantage, and the above need together with numerous other objects, advantages, and needs, which will be evident from the below detailed description of the present invention, are in accordance with the first aspect of the present invention obtained by the tubular liner for re-lining a district heating pipe of claim 1. The first tubular layer of woven fiber material is impregnated with a curable and high-temperature-resistant resin, and comprises corrosion resistant reinforcing fibers.

No coating layer that may leak water is provided. This solves the problems with water entering the liner, also from an outside of the liner, since the cured resin efficiently stops water from entering into the tubular liner both from an inside as well as from the outside of the liner. Thus the embrittlement that causes traditional methods to fail is avoided.

The technique of re-lining pipes by introducing the tubular liner impregnated with a curable and high-temperature-resistant resin into the pipe and solidifying the pipe by curing the resin included in the tubular liner can be carried out in accordance with two alternative techniques, the one including the simple technique of pulling the liner into the pipe to be renovated and forcing the lining tube outwardly into contact with the inner surface of the pipe and a different technique involving the so-called inversion of the tubular liner as the tubular liner is turned inside out as water, steam or preferably pressurized air is used to force the tubular liner in the inversion process into the pipe and afterwards solidifying the tubular liner by introducing hot water or steam or hot air into the lining tube for causing the resin to cure to a high-temperature-resistant resin.

The cured tubular liner is able of withstanding degradation from heat and/or hydrolysis when exposed to district heating water having a temperature of 110-150 °C and high pressures. The tubular liner according to the present invention is typically be applied to damaged district heating pipes or non-damaged district heating pipes in order to prevent corrosion and extend the lifetime of the district heating pipe.

The method of the present invention is particularly useful for increasing the productivity when renovating pipes or system of pipes, since no trenching is required.

In one embodiment of the tubular liner according to the invention, the curable and high-temperature-resistant resin comprises a synthetic resin such as epoxy. Preferably a heat-curable and high-temperature-resistant resin is used such as epoxy. By using epoxy or any similar synthetic resin, it may be ensured that the liner before curing will have a sufficient flexibility for being installed and adjusted inside the district heating pipe. After curing, the liner will assume a hardened state providing a high-temperature-resistant resin. Since the liner does not comprise additional coating layers, the flexibility before curing is sufficient for easy installation.

The above object, the above advantage, and the above need together with numerous other objects, advantages, and needs which will be evident from the below detailed description of the present invention are in accordance with the second aspect of the present invention obtained by the method of re-lining a district heating pipe of claim 5.

The tubular liner is inserted into the district heating pipe in an uncured condition and is subsequently cured typically by the application of heat in order to form a solid liner which is fixated within the district heating pipe. The cured liner is subsequently cooled, cut into a proper shape and sealed.

The technique of inverting the liner into the district heating pipe involves the so-called inversion of the tubular liner assembly as the tubular liner assembly, which is closed at the end, is turned inside out as fluid, such as water or pressurised air, is used to force the tubular liner in the inversion process into the district heating pipe. Alternatively, in some specific occasions it may be preferred to simply pull the tubular liner assembly into the district heating pipe to be renovated and force the lining tube outwardly into contact with the inner surface of the pipe by means of ropes or wires.

According to a one embodiment of the claimed method, the step of inverting the tubular liner assembly into the district heating pipe is performed by introducing fluid, preferably liquid water or pressurized gas such as air into the assembly.

Before curing, the liner may be adjusted and subsequently fixated. When it has been ensured that the tubular liner has assumed the proper position into the pipe, the tubular liner is solidified by introducing hot water, or steam into the tubular liner assembly for causing the resin to cure.

According to a further embodiment of the claimed method, the curable and high-temperature-resistant resin is heat-curable and the step of curing the curable and high-temperature-resistant resin is performed by introducing hot water or steam into the tubular liner. The temperature of the steam and water should preferably be comparable to the maximum temperature of the district heating water, i.e. 110-150°C.

According to the third aspect, the present invention relates to the use of a tubular liner for re-lining a district heating pipe according to claim 7.

### BRIEF DESCRIPTION OF DRAWINGS

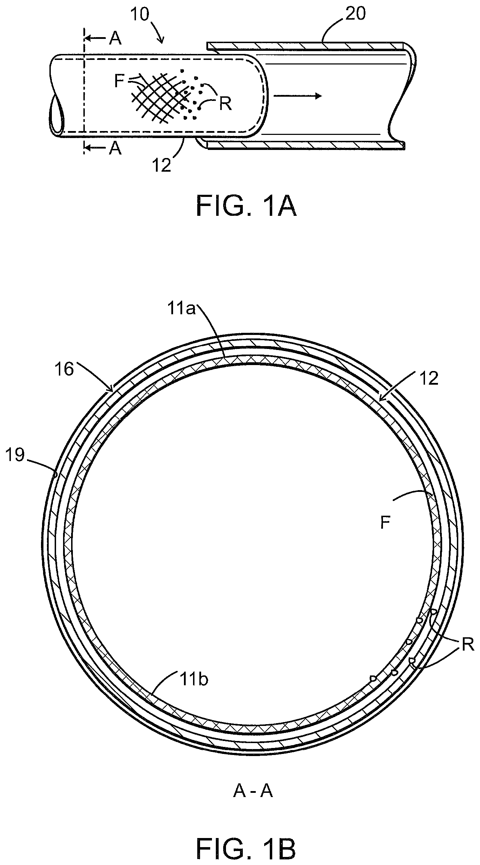

Fig 1A is a perspective view of a tubular liner according to an embodiment of the present invention; and
Fig. 1B is a cross sectional view of a tubular liner along line A-A according to an embodiment of the present invention.

### DETAILED DESCRIPTION

Fig 1A shows a perspective view of a district heating pipe 20 including a tubular liner 10 partly introduced into the district heating pipe 20 (shown in cross-section). The tubular liner 10 comprises a first tubular layer 12 of woven fiber material (schematically illustrated only) comprising corrosion resistant reinforcing fibers F and being impregnated with a curable resin R.

The first tubular layer 12 of fiber material is typically woven in 90° directions (as schematically illustrated). Typically, but without any limitation thereto, the woven fiber material is selected to follow any extension in length. Preferably, the first tubular layer 12 comprises at least three layers (not shown explicitly) of woven corrosion resistant reinforcing fibers F. The first tubular layer 12, and any additional tubular layer comprising corrosion resistant reinforcing fibers F, is impregnated with a curable high-temperature-resistant, such as an epoxy resin. The woven fiber can be adjusted so that different physical strength and toughness is achieved in different directions by varying the weight of the included carbon fiber.

In the present context it would be an advantage to be able to use a heat-curable and high-temperature-resistant resin in combination with corrosion resistant reinforcing fibers in order to allow the liner to be easy to handle and install in the defective district heating pipeline without the need for a coating layer. By using truly corrosion resistant fibers that does not quickly degrade the issue of water entering the liner is solved. The liner is isotropic with respect to its corrosion resistance. Also problems with de-lamination of multiple layers, which prior art often suffers from can be solved.

The present invention provides a re-liner for and a relining method of re-lining a district heating pipe, which fulfil the requirements mentioned above, in particular being resistant to water also from the outside of the liner inside the district heating pipe.

Typically, the curable epoxy resin R should have a softening temperature or glass transition temperature of over 140 °C or 20 °C above the maximum working temperature of the pipe. For convenient handling, the pot life should be at least 15-24 hours at 23 °C and 5 days at 4 °C. The flexibility of the cured resin should be at least 1 % before rupture. The cured resin should be high-temperature-resistant to at least 110-150 °C. Typically, the cured resin R should also be resistant to low temperatures if used in cooling pipes instead of heating pipes.

Typically, according to an embodiment, the tubular liner 10 comprises a high-temperature-resistant curable resin R, when cured being capable of withstanding degradation from heat and/or hydrolysis when exposed to district heating water having a pressure of 1-25 bar, preferably between 1-16 bar, more preferably between 5-16 bar, such as 15-16 bar.

In a further embodiment of the inventive tubular liner, the woven fiber material has a mass per square meter of 100-3000 grams/m², preferably 600-1200 grams/m², more preferably between 800-1000 grams/m², most preferably 900 grams/m².The above amounts of corrosion resistant reinforcing fibers F will be sufficient for allowing the liner 10, when cured, to withstand the above-mentioned pressures of 16 bar or even 25 bar.

The fibers F, which are oriented in the longitudinal direction, i.e. axial direction, will reinforce the liner 10 with respect to longitudinal forces such as the forces applied when the liner 10 is installed in the district heating pipe or heat expansion mismatch with the preexisting pipe. The transversally oriented fibers F, i.e. peripherally oriented fibers, will reinforce the liner 10 with respect to transversal forces, i.e. outwardly oriented forces which apply to the liner due to the pressure of the district heating water or from external loads such as that of the earth masses the pipe is buried in.

Now referring to Fig. 1B.

In yet another embodiment the inventive tubular liner, on an outside 11a thereof, further comprises a second layer 16 of glass felt material. This layer provides a smoother surface, which may provide a higher flow for a particular dimension of the pipe 20.

It is also possible to provide an insulator layer of e.g. polyurethane foam, typically up to 30 mm on the outside 11a of the first tubular layer 12. Further advantages include improved heat insulator.

### Example

A typical, but not limiting, example of an installation is a district heating pipe 20 with an inner diameter of 250 mm to 400 mm even though other diameters may readily occur, and a wall thickness 3 mm to 12 mm. Other thicknesses of district heating pipe 20 walls can also occur. The district heating pipe 20 is accessed either through a premade access tunnel or by digging a trench down to the pipe 20 (not shown). The district heating pipe is typically 1-3 meters below ground, but other depths can also occur. In a typical installation the trench is dug 2*2 m square width to allow access to a large enough section of pipe to efficiently gain access to the pipe. Typically, the size of the trench is regulated by health and safety regulations in individual countries. The district heating pipe 20 has typically been pre-inspected for any damages and has also been cleaned before gaining access, but cleaning and inspection can also be carried out after getting access.

The cleaning is preferably a high pressure and temperature flush, where water at high pressure is used to clean any internal corrosion. Final access to the inside of the pipe is typically provided by using a means of cutting an oval opening in the pipe. Preferably the pipe is not cut entirely in two, but instead a sealable access to roughly half the pipe diameter is provided.

The edges of the hole in the pipe are typically rounded down by grinding and/or covered by the use of a protective plastic or tape. A typical installation can be 70-100 meters long or whichever standard length is between pipe access points.

The liner 10 is then winched into the pipe while being protected by plastic or metallic foils 19. Preferably one foil is used as a layer to decrease friction when winching the liner 10 into the pipe 20. The liner 10 can additionally be protected by a foil to minimize any adhesion between liner and friction reduction foils. The liner 10 can also have a foil (not shown) on the inside to stop adhesion before the liner 10 is inflated, and to keep the liner airtight when inflation occurs. Once installed the friction foil and outer foil 19 is pulled out of the pipe 20 and the liner10 is inflated. The liner 10 can be kept inflated for some time or the hardening/annealing process to cure the liner can be started immediately. The liner is typically cured under a suitable temperature. One such temperature can be 150 °C, this will depend on the resin system. Ideally the resin system is one that has a Tg significantly higher than the pipes maximum media temperature. In one such case the Tg is 150 °C and the media max temperature is 120 °C.

The liner 10 is typically cured by means of steam or hot air. The cure temperature will depend on the resin system used. In one such example the cure temperature is 150 °C for 4 hours with a ramp up of 40 °C/h. Once cured, the liner is cut and a sealing ring is inserted to hold the edge of the liner down towards the pipe walls. The liner can be made to either adhere to the pipe walls or to float without wall adhesion. Once installed the pipe is resealed by means of a weld.

In addition or instead of steam, an ultraviolet radiation curing device may be used in order to finalize the curing process.

It is understood that the liner is tubular when inserted into the district heating pipeline. The district heating pipeline typically comprises an inner pipeline of metal, such as stainless steel, and an outer pipeline of insulating material. The diameter of the tubular liner should essentially correspond to the inner diameter of the district heating pipe. The liner is assembled in a flat state, i.e. the first tubular layer is provided in the form of felt sheet having an appropriate length and width. The tubular shape is formed such that an outside of the first tubular layer will face the interior of the pipeline once the liner is installed in the pipeline. The tubular shape can be formed by weaving or stitching the fibers to the tubular liner. Subsequently, the liner 10 is impregnated by allowing the fibers F of the first tubular layer 12 to be soaked with resin R.

The resin R may be a Bisphenol-based resin which is capable of withstanding high temperatures without degrading.

The resin R should preferably be a heat-curable and high-temperature-resistant resin. After impregnation, the liner 10 is flexible and may be folded in order to be transported to the installation site in an easy and efficient manner. When the liner 10 has been installed, it may be cured by hot water or steam in order for the curable and high-temperature-resistant resin to solidify and form a solid liner. The temperature needed for curing is typically slightly lower than the maximum operating temperature of the cured resin, thus about 110-150 °C.

The liner together with the existing district heating pipe should be capable of withstanding at least 16 bar which is the highest typical operating pressure and preferably at least 25 bar which is the typical test pressure for district heating pipes.

The cured high-temperature-resistant resin should be provided on an inner side 11b of the installed liner 10 and will thus be in contact with the district heating water flowing through the installed liner within the district heating pipe 20. The high-temperature-resistant resin R may be any liquid tight material which is not degraded by the heat applied to it by the district heating water, i.e. the high-temperature-resistant coating should remain solid when exposed to the district heating water having the temperature of 110-150°C. Further, the high-temperature-resistant resin should not degrade due to hydrolysis from the exposure by the district heating water.

Herein, hydrolysis is understood to be the process in which certain materials, in particular polymers, are broken down in a chemical reaction between the material in question and the water. The high temperature of the water will accelerate the degradation. Suitable material for the high-temperature-resistant resin may be found in the class of epoxy materials, among which many fulfill the above-mentioned criterion of withstanding degradation from heat and/or hydrolysis when exposed to district heating water. The uncured high-temperature-resistant resin should be thin in order to not compromise the flexible nature of the liner before curing of the resin. The liner can be impregnated just before being introduced into the district heating pipe, or be provided as a pre-impregnated prepreg.

## Claims

1. A tubular liner (10) for re-lining a district heating pipe (20), the tubular liner (10) comprising a first tubular layer (12) of woven fiber material, said first tubular layer (12) of woven fiber material being impregnated with a curable resin (R), said first tubular layer (12) of woven fiber material comprising corrosion resistant reinforcing fibers (F), **characterized in that** the tubular liner (10) comprises the first tubular layer (12) of woven fiber material comprising corrosion resistant reinforcing carbon fibers being impregnated with the curable resin, said tubular liner is configured to form, after having been cured, a high-temperature resistant coating, which coating is high-temperature resistant to at least 110-150 °C, wherein the cured coating remains solid when exposed to district heating water having the temperature of 110-150 °C and effectively stops water from entering into the tubular liner both from an inside as well from an outside of the tubular liner and capable of withstanding degradation from heat and/or hydrolysis when exposed to district heating water having a pressure of 1-25 bar, and **in that** the tubular liner (10) does not comprise an additional coating layer.

2. The tubular liner (10) according to claim 1, wherein said first tubular layer (12) has a mass per square meter of 100-3000 grams/m², preferably 600-1200 grams/m², more preferably between 800-1000 grams/m², most preferably 900 grams/m².

3. The tubular liner (10) according to claim 1 or 2, wherein said curable resin (R) comprises a synthetic resin such as epoxy.

4. The tubular liner (10) according to any one of the preceding claims, wherein a protecting thermoplastic foil is applied onto said first tubular layer (12), preferably by means of extrusion.

5. A method of renovating a district heating pipe (20), said method comprising the steps of:
- providing a tubular liner (10) of claim 1 comprising a first tubular layer (12) of woven fiber material comprising corrosion resistant reinforcing carbon fibers being impregnated with a curable resin (R);
- introducing and fixating said tubular liner (10) within said district heating pipe (20); and
- curing said curable resin (R) of the first tubular layer (12).

6. The method according to claim 5, wherein said curable resin (R) is heat-curable and the step of curing said curable resin is performed by introducing hot water or steam or hot air into said tubular liner (10).

7. Use of a tubular liner (10) in a district heating pipe (20), wherein the tubular liner is characterized according to claim 1.

## Patentansprüche

1. Rohrförmiger Liner (10) zum Relining einer Fernwärmeleitung (20), wobei der rohrförmige Liner (10) eine erste rohrförmige Schicht (12) aus gewebtem Fasermaterial aufweist, wobei die erste rohrförmige Schicht (12) aus gewebtem Fasermaterial mit einem aushärtbaren Harz (R) imprägniert ist, wobei die erste rohrförmige Schicht (12) aus gewebtem Fasermaterial korrosionsbeständige Verstärkungsfasern (F) aufweist,
**dadurch gekennzeichnet, dass**
der rohrförmige Liner (10) die erste rohrförmige Schicht (12) aus gewebtem Fasermaterial aufweist, die korrosionsbeständige verstärkende Kohlenstofffasern aufweist, die mit dem aushärtbaren Harz imprägniert sind, wobei der rohrförmige Liner dafür konfiguriert ist, eine hochtemperaturbeständige Beschichtung zu bilden, nachdem er ausgehärtet ist, wobei die Beschichtung hochtemperaturbeständig bis mindestens 110 - 150°C ist, wobei die ausgehärtete Beschichtung fest bleibt, wenn sie Fernwärmewasser mit einer Temperatur von 110 - 150°C ausgesetzt ist, und ein Eindringen von Wasser in den Rohrliner sowohl von innerhalb als auch von außerhalb des rohrförmigen Liners wirksam verhindert und in der Lage ist einer Zersetzung durch Hitze und/oder Hydrolyse standzuhalten, wenn sie Fernwärmewasser mit einem Druck von 1 - 25 bar ausgesetzt ist, und
dadurch, dass der Rohrliner (10) keine zusätzliche Beschichtungsschicht aufweist.

2. Rohrförmiger Liner (10) nach Anspruch 1, wobei die erste rohrförmige Schicht (12) eine Masse pro Quadratmeter von 100 bis 3000 Gramm/m², vorzugsweise 600 bis 1200 Gramm/m², bevorzugter zwischen 800 und 1000 Gramm/m², am bevorzugtesten 900 Gramm/m² aufweist.

3. Rohrförmiger Liner (10) nach Anspruch 1 oder 2, wobei das aushärtbare Harz (R) ein synthetisches Harz wie Epoxidharz aufweist.

4. Rohrförmiger Liner (10) nach einem der vorangehenden Ansprüche, wobei eine schützende thermoplastische Folie auf die erste rohrförmige Schicht (12) aufgebracht ist, vorzugsweise durch Extrudieren.

5. Verfahren zum Sanieren einer Fernwärmeleitung (20), wobei das Verfahren die Schritte aufweist:
Bereitstellen eines rohrförmigen Liners (10) nach Anspruch 1, der eine erste rohrförmige Schicht (12) aus gewebtem Fasermaterial aufweist, das korrosionsbeständige verstärkende Kohlenstofffasern aufweist, die mit einem aushärtbaren Harz (R) imprägniert sind;
Einführen und Fixieren des rohrförmigen Liners (10) in der Fernwärmeleitung (20); und
Aushärten des aushärtbaren Harzes (R) der ersten rohrförmigen Schicht (12).

6. Verfahren nach Anspruch 5, wobei das aushärtbare Harz (R) wärmeaushärtbar ist und der Schritt zum Aushärten des aushärtbaren Harzes durch Einleiten von heißem Wasser oder Dampf oder heißer Luft in den rohrförmigen Liner (10) ausgeführt wird.

7. Verwendung eines rohrförmigen Liners (10) in einem Fernwärmerohr (20), wobei der rohrförmige Linner gemäß Anspruch 1 gekennzeichnet ist.

## Revendications

1. Garnissage tubulaire (10) pour re-garnir un tuyau de chauffage urbain (20), le garnissage tubulaire (10) comportant une première couche tubulaire (12) de matériau fibreux tissé, ladite première couche tubulaire (12) de matériau fibreux tissé étant imprégnée d'une résine durcissable (R), ladite première couche tubulaire (12) de matériau fibreux tissé comportant des fibres de renforcement résistantes à la corrosion (F), **caractérisé en ce que** le garnissage tubulaire (10) comporte la première couche tubulaire (12) de matériau fibreux tissé comportant des fibres de carbone de renforcement résistantes à la corrosion imprégnée de la résine durcissable, ledit garnissage tubulaire est configuré pour former, après avoir été durci, un revêtement résistant à haute température, lequel revêtement est résistant à haute température à au moins 110-150 °C, dans lequel le revêtement durci reste solide lorsqu'il est exposé à de l'eau de chauffage urbain ayant la température de 110-150 °C et empêche efficacement l'eau de pénétrer dans le garnissage tubulaire à la fois par l'intérieur et par l'extérieur du garnissage tubulaire et est capable de résister à la dégradation due à la chaleur et/ou à l'hydrolyse lorsqu'il est exposé à de l'eau de chauffage urbain ayant une pression de 1-25 bar, et **en ce que** le garnissage tubulaire (10) ne comporte pas de couche de revêtement supplémentaire.

2. Garnissage tubulaire (10) selon la revendication 1, dans lequel ladite première couche tubulaire (12) présente une masse par mètre carré de 100-3000 grammes/m², de préférence 600-1200 grammes/m², plus préférentiellement comprise entre 800-1000 grammes/m², idéalement 900 grammes/m².

3. Garnissage tubulaire (10) selon la revendication 1 ou 2, dans lequel ladite résine durcissable (R) comporte une résine synthétique telle que l'époxy.

4. Garnissage tubulaire (10) selon l'une quelconque des revendications précédentes, dans lequel une feuille thermoplastique protectrice est appliquée sur ladite première couche tubulaire (12), de préférence par extrusion.

5. Procédé de rénovation d'un tuyau de chauffage urbain (20), ledit procédé comportant les étapes de :
- fourniture d'un garnissage tubulaire (10) selon la revendication 1 comportant une première couche tubulaire (12) de matériau fibreux tissé comportant des fibres de carbone de renforcement résistantes à la corrosion imprégnée d'une résine durcissable (R) ;
- introduction et fixation dudit garnissage tubulaire (10) à l'intérieur dudit tuyau de chauffage urbain (20) ; et
- durcissement de ladite résine durcissable (R) de la première couche tubulaire (12).

6. Procédé selon la revendication 5, dans lequel ladite résine durcissable (R) est thermodurcissable et l'étape de durcissement de ladite résine durcissable est réalisée par introduction d'eau chaude ou de vapeur ou d'air chaud dans ledit garnissage tubulaire (10).

7. Utilisation d'un garnissage tubulaire (10) dans un tuyau de chauffage urbain (20), dans laquelle le garnissage tubulaire est caractérisé selon la revendication 1.
